# EUROPÄISCHE PATENTANMELDUNG

(11) **EP 4 509 802 A1**
(43) Veröffentlichungstag der Anmeldung: **19.02.2025**
(21) Anmeldenummer: 23191975.4
(22) Anmeldetag: 17.08.2023
(51) Int. Cl.: G01F 11/24, G01F 25/00, B65B 1/36

(54) **VERFAHREN ZUR ERZEUGUNG EINZELNER DOSIERMENGEN MITTELS EINES WALZENDOSIERERS**

(71) Anmelder: Harro Höfliger Verpackungsmaschinen GmbH, 71573 Allmersbach im Tal (DE)
(72) Erfinder: Handel, Bernhard, 71566 Althütte (DE)
(74) Vertreter: Zurhorst, Stefan

(57) **Zusammenfassung**

Die Erfindung betrifft ein Verfahren zur Erzeugung einzelner Dosiermengen (2) eines pulvrigen Produkts (1) mittels eines Walzendosierers (3). Der Walzendosierer (3) umfasst eine Dosierwalze (5) und eine kapazitive Messvorrichtung (6) zur Massenbestimmung der Dosiermengen (2), wobei die Dosierwalze (5) umfangsseitig mit mindestens einer Dosieröffnung (7) versehen ist. In einer Ausstoßposition (III) erfolgt ein Ausstoßvorgang, wobei die Dosieröffnung (7) mit einem Ausstoß-Überdruck (p) beaufschlagt und dadurch die Dosiermenge (2) aus der Dosieröffnung (7) ausgestoßen wird, und wobei ein zugehöriger Ausstoß-Referenzzeitpunkt (tₐ) bestimmt wird. Die Einzelmasse einer ausgestoßenen Dosiermenge (2) und ein zugehöriger Mess-Referenzzeitpunkt werden mittels der kapazitiven Messvorrichtung (6) bestimmt. Aus der Differenz zwischen dem Mess-Referenzzeitpunkt und dem Ausstoß-Referenzzeitpunkt (tₐ) wird eine Ist-Zeitspanne (Δt) ermittelt und mit dem mindestens einer Sollzeitspanne verglichen. Abhängig vom Vergleich der Ist-Zeitspanne (Δt) mit der mindestens einen Sollzeitspanne wird eine Anpassung des Ausstoß-Überdrucks (p) für einen nachfolgenden Ausstoßvorgang derart vorgenommen, dass bei zu großer Ist-Zeitspanne (Δt) das Niveau des Ausstoß-Überdrucks (p) erhöht wird.

## Beschreibung

Die Erfindung betrifft ein Verfahren zur Erzeugung einzelner Dosiermengen eines pulvrigen Produkts mittels eines Walzendosierers.

Beispielsweise im Pharmabereich, aber auch im Bereich von Nahrungsergänzungsmitteln oder dgl. werden Pulver verarbeitet, die für die vorgesehene Darreichungsform in präzise abgemessenen Teilmengen bzw. Dosiermengen bereitgestellt werden müssen. Zielbehälter beispielsweise in Form von Blistern, Steckkapseln oder dergleichen werden mit solchen abgemessenen Dosiermengen eines pulvrigen Produkts befüllt, so dass der Verbraucher entsprechende Einheitsdosen zur Verfügung hat und einnehmen kann.

Derartige pulvrige Produkte werden insbesondere auf sogenannten Walzendosierern in einzeln abgemessene Dosiermengen überführt, welche dann in jeweilig zugeordneten Zielbehältern abgefüllt werden. Ein solcher Walzendosierer umfasst eine Dosierwalze, welche umfangsseitig mit mindestens einer, im Regelfall mit mehreren Dosieröffnungen versehen ist, wobei die Dosieröffnungen innenseitig mittels eines Filterelements begrenzt sind und durch das Filterelement hindurch mit einem Unterdruck beaufschlagbar sind. Unter Einwirkung des Unterdrucks wird Pulver in die Dosieröffnungen eingesaugt, wobei sich Dosiermengen des Pulvers bilden, deren Volumen dem Volumen der jeweiligen Dosieröffnung entspricht. Die solchermaßen gebildeten Dosiermengen werden dann aus den Dosieröffnungen mittels Überdruck ausgestoßen und zum Zielbehälter weitergeleitet.

Aus den vorangegangenen Ausführungen wird deutlich, dass es sich bei der Dosierung mittels eines Walzendosierers um eine volumetrische Dosierung handelt. Angestrebt ist im Regelfall aber eine Dosierung, bei der die abgemessene Dosiermenge eine bestimmte Masse innerhalb einer zulässigen Toleranzbandbreite aufweist. Für die volumetrische Dosierung ist es also von Bedeutung, dass es eine möglichst wiederholbare Relation zwischen dem abgemessenen Volumen und der dabei tatsächlich erzielten Masse gibt.

Zur Prüfung der tatsächlich erzielten Dosiergenauigkeit werden zunehmend sogenannte "Advanced Mass Verification" (AMV-) Systeme eingesetzt, wobei eine kapazitive Messvorrichtung zum Einsatz kommt. Die aus der Dosieröffnung ausgestoßene Dosiermenge fällt durch eine kapazitive Messstrecke des AMV-Systems und erzeugt dabei ein kapazitives Messsignal. Bei korrekter Kalibrierung gibt dieses Messsignal Aufschluss über die Masse der Dosiermenge und erlaubt eine stichprobenartige oder sogar 100%ige Kontrolle des Dosiervorganges.

Aus der EP 3 608 232 A1 ist ein Verfahren bekannt, bei dem unter Zuhilfenahme eines solchen AMV-Systems eine fortlaufende Massenbestimmung vorgenommen wird. Durch Mittelwertbildung erfolgt ein Tendenzregelung des Ansaugunterdrucks, um eine möglichst gleichmäßige Füllung der Dosieröffnungen zu erreichen.

Dennoch ist ein solches Verfahren nicht frei von Schwierigkeiten. Beispielsweise hat sich gezeigt, dass das Ausstoßen der Dosiermengen nicht immer gleichförmig verläuft. Die Dosiermengen in Form eines Pulverpfropfens lösen sich beim Ausstoßen nicht immer gleichförmig, was zu unterschiedlichen Fallgeschwindigkeiten und auch zu Taumelbewegungen beim Fallen führen kann. In der Folge kann dies zu Verfälschungen der Messergebnisse des AMV-Systems oder sogar zu Störungen des Dosierprozesses insgesamt führen.

Der Erfindung liegt deshalb die Aufgabe zugrunde, ein Verfahren anzugeben, mittels dessen die von einem Walzendosierer erzeugten Einzelmassen in einfacher Weise kontrolliert ausgestoßen und geprüft werden können.

Diese Aufgabe wird durch ein Verfahren mit den Merkmalen des Anspruchs 1 gelöst.

Gemäß der Erfindung ist ein Verfahren vorgesehen, welches folgende Schritte umfasst:
- Die Dosierwalze wird soweit gedreht, dass sich zumindest eine Dosieröffnung in einer Füllposition befindet;
- In der Füllposition erfolgt ein Füllvorgang, in welchem die Dosieröffnung aus dem Produktvorrat mit einer Teilmenge des pulvrigen Produkts befüllt wird, wobei die Dosieröffnung durch das Filterelement hindurch mit Unterdruck beaufschlagt wird, und wobei sich in der Dosieröffnung eine Dosiermenge des pulvrigen Produkts bildet;
- Die Dosierwalze wird soweit gedreht, dass sich die mit der Dosiermenge befüllte Dosieröffnung in einer Ausstoßposition befindet;
- In der Ausstoßposition erfolgt ein Ausstoßvorgang, wobei die Dosieröffnung durch das Filterelement hindurch mit einem Ausstoß-Überdruck beaufschlagt und dadurch die Dosiermenge aus der Dosieröffnung ausgestoßen wird, und wobei ein zugehöriger Ausstoß-Referenzzeitpunkt bestimmt wird;
- die Einzelmasse einer ausgestoßenen Dosiermenge und ein zugehöriger MessReferenzzeitpunkt werden mittels der kapazitiven Messvorrichtung bestimmt;
- Aus der Differenz zwischen dem Mess-Referenzzeitpunkt und dem Ausstoß-Referenzzeitpunkt wird eine Ist-Zeitspanne ermittelt und mit mindestens einer Sollzeitspanne verglichen;
- Abhängig vom Vergleich der Ist-Zeitspanne mit der mindestens einen Sollzeitspanne wird eine Anpassung des Ausstoß-Überdrucks für einen nachfolgenden Ausstoßvorgang derart vorgenommen, dass bei zu großer Ist-Zeitspanne das Niveau des Ausstoß-Überdrucks erhöht wird.

Mit anderen Worten wird der Vergleich der Ist-Zeitspanne mit der mindestens einen Sollzeitspanne zur Überwachung von Prozessgrenzen und als Fehlerreaktion herangezogen. Sofern sich das Filterelement im Laufe der Zeit langsam zusetzt, reduziert sich die Ausblaswirkung eines fest eingestellten Ausstoß-Überdrucks. Die Ablösung der Pulvermenge aus der Dosieröffnung erschwert sich, was zu ungleichmäßigen Fallbewegungen bei verringerter Fallgeschwindigkeit führt. Die erfindungsgemäße Nachführung des Ausstoß-Überdrucks erreicht dem gegenüber, dass das Ausdosierverhalten und die Fallgeschwindigkeit der ausgestoßenen Dosiermenge möglichst konstant gehalten werden. Eine weitgehend konstante Geschwindigkeit bei weitgehend taumelfreier Bewegung der Dosiermenge im Messfeld der kapazitiven Messvorrichtung bzw. des zugehörigen AMV-Sensors können durch das erfindungsgemäße Verfahren erreicht werden, was in der Folge die Präzision bei der Massenbestimmung verbessert. Zusätzlich ermöglichen die erfindungsgemäßen Vergleichsmessungen eine erweiterte Prozessüberwachung und eine frühzeitige Reaktion auf sich abzeichnende Veränderungen im Prozess. Darüber hinaus kann eine statistische Auswertung der einzelnen Vergleichswerte durch Bewertung von beispielsweise Varianz, Spannweite usw. als Kriterium für die Prozessstabilität dienen. Ein weiterer Aspekt besteht darin, dass die Übertragbarkeit von Prozessparametern zwischen verschiedenen Walzendosiersystemen, also beispielsweise von einer Labormaschine auf eine Produktionsmaschine erleichtert wird.

Bei Durchtritt der Dosiermenge durch die Messstrecke des AMV-Sensors wird ein Messsignal mit einem zeitlichen Verlauf erzeugt. Hiervon kann ein geeigneter Zeitpunkt, beispielsweise ein Anfangs- oder Endzeitpunkt als Mess-Referenzzeitpunkt gewählt werden. Bevorzugt wird aus dem zeitlichen Verlauf des Messsignals dessen Peak- beziehungsweise Maximalwert mit einem zugehörigen Maximalwertzeitpunkt bestimmt, wobei dann der Mess-Referenzzeitpunkt gleich dem Maximalwertzeitpunkt gesetzt wird. Der Maximalwertzeitpunkt lässt sich mit hoher Reproduktionsgenauigkeit exakt bestimmten, was der Messgenauigkeit zu Gute kommt.

Es kann ausreichen, einen bestimmten Zeitpunkt als Sollzeitpunkt festzulegen, an welchem der Messreferenzzeitpunkt liegen sollte, wobei dann Abweichungen davon zu der vorstehend beschriebenen Nachführung des Ausstoß-Überdrucks führen. In bevorzugter Weiterbildung wird aber eine Toleranz festgelegt, wobei erst bei Überschreiten dieser Toleranz eine Drucknachführung erfolgt. Demnach werden aus dem oberen Toleranzwert eine obere Grenzeitspanne und daraus eine erste Sollzeitspanne gebildet. Wenn dann die Ist-Zeitspanne die obere Grenzeitspanne überschreitet, wird eine Erhöhung des Ausstoß-Überdrucks vorgenommen. Die Festlegung einer Toleranzschwelle vermeidet unnötige Eingriffe in die Druckregelung infolge geringfügiger und produktionsüblicher Druckschwankungen.

Vorstehend wurde hauptsächlich die Erhöhung des Ausstoß-Überdrucks infolge einer zu groß werdenden Ist-Zeitspanne in Bezug genommen. Dies ist in der Praxis der erwartbare Fall bei langsam sich zusetzenden Filterelementen und daher nachlassender Druckwirkung. Unter Umständen kann also auf eine Druckanpassung in Gegenrichtung verzichtet werden. Allerding kann es im Rahmen der Erfindung vorteilhaft sein, das vorstehend zur Druckerhöhung gesagte in analoger Weise auch auf eine Druckverringerung anzuwenden, wobei also abhängig vom Vergleich der Ist-Zeitspanne mit der mindestens einen Sollzeitspanne eine Anpassung des Ausstoß-Überdrucks für einen nachfolgenden Ausstoßvorgang derart vorgenommen wird, dass bei zu kleiner Ist-Zeitspanne das Niveau des Ausstoß-Überdrucks verringert wird. Insbesondere wird dabei also eine zweite Sollzeitspanne durch eine untere Grenzeitspanne gebildet. Wenn dann die Ist-Zeitspanne die untere Grenzeitspanne unterschreitet, wird eine Verringerung des Ausstoß-Überdrucks vorgenommen.

In einer ersten vorteilhaften Variante kann es zweckmäßig sein, dass die Druckanpassung inkrementell in fest vorgegebenen Druckschritten vorgenommen wird. Hierfür ist ein geringer Steuerungsaufwand erforderlich, was zu einer Vereinfachung der Prozessführung beiträgt. In einer alternativen Variante wird die Druckanpassung funktional und insbesondere proportional zur Abweichung der Ist-Zeitspanne von der Sollzeitspanne vorgenommen. In einer solchen funktionalen, insbesondere proportionalen Anpassung ist eine sehr exakte Nachregelung möglich.

Die Druckanpassung kann anhand von stichprobenartigen Einzelmessungen vorgenommen werden. In vorteilhafter Weiterbildung wird die Ist-Zeitspanne durch einen Mittelwert von mehreren erfassten Differenzen zwischen einem MessReferenzzeitpunkt und einem Ausstoß-Referenzzeitpunkt gebildet, wobei dann dieser Mittelwert mit der mindestens einen Sollzeitspanne verglichen wird. Die Mittelwertbildung gleicht punktuelle oder kurzfristige, für die Prozessstabilität irrelevante Schwankungen in den Messergebnissen aus, sodass vor allem die für die Prozessführung wichtigen längerfristigen Änderungen Berücksichtigung finden.

Ein Ausführungsbeispiel der Erfindung ist nachfolgend anhand der Zeichnung näher beschrieben. Es zeigen:
- Fig. 1: in einer schematischen Querschnittdarstellung einen Walzendosierer mit einem Produktvorrat, mit einer Dosierwalze und mit einer kapazitiven Messvorrichtung zur Massenbestimmung der einzelnen Dosiermengen bei der Ausführung des erfindungsgemäßen Verfahrens,
- Fig. 2: in einer schematischen Phasendarstellung eine einzelne Dosiermenge bei verschiedenen Zeitpunkten des Durchtritts durch die Messstrecke der kapazitiven Messvorrichtung nach Fig. 1, und
- Fig. 3: in einer Diagrammdarstellung den Signalverlauf der kapazitiven Messvorrichtung nach Fig. 1 mit den verschiedenen Zeitpunkten nach Fig. 2 und mit dazwischenliegenden Zeitspannen zur Ausführung des erfindungsgemäßen Verfahrens.

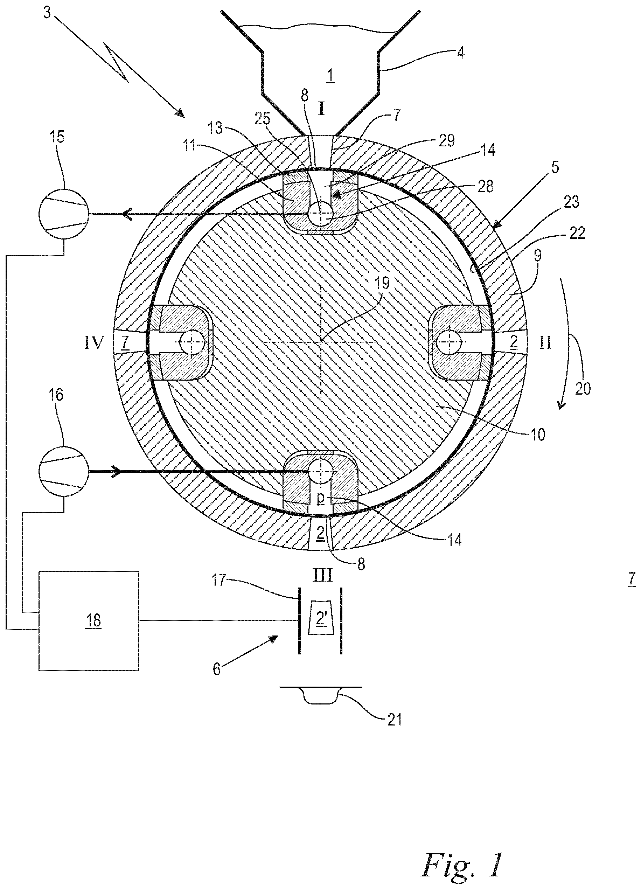

Fig. 1 zeigt in einer schematischen Querschnittdarstellung einen Walzendosierer 3 bei der Erzeugung einzelner Dosiermengen 2 eines pulvrigen Produkts 1 und zur Überführung solcher einzelner Dosiermengen 2 in einen Zielbehälter 21. Bei dem pulvrigen Produkt handelt es sich hier um ein pharmazeutisches Pulver. Es kann sich aber auch um ein pulverförmiges Nahrungsergänzungsmittel oder dergleichen handeln. Der Zielbehälter 21 ist hier ein schematisch angedeuteter Blister, der nach der Befüllung noch mit einer Deckfolie versiegelt wird. Als Zielbehälter 21 kommen aber auch Stecckapseln oder andere Behälter in Betracht.

Der Walzendosierer 3 umfasst einen Produktvorrat 4, eine Dosierwalze 5 und eine kapazitive Messvorrichtung 6. Die kapazitive Messvorrichtung 6 wird auch als "Advanced Mass Verification System" oder AMV-System bezeichnet. Im trichterförmigen Produktvorrat 4 wird das pulvrige Produkt 1 zur Abmessung bereitgehalten. Mittels der Dosierwalze 5 werden aus dem Produktvorrat 4 Teilmengen des pulvrigen Produkts 1 entnommen und daraus volumetrisch exakt definierte Dosiermengen 2 gebildet. Eine anschließende Massenbestimmung einzelner, insbesondere aller Dosiermengen 2, erfolgt mittels der kapazitiven Messvorrichtung 6.

Die Dosierwalze 5 erstreckt sich entlang einer Längsachse und ist bezogen auf diese Längsachse im Wesentlichen zylindrisch ausgebildet. Umfangsseitig weist sie mindestens eine Dosieröffnung 7 auf. Im gezeigten bevorzugten Ausführungsbeispiel ist die Dosierwalze 5 mit mehreren Dosieröffnungen 7 versehen. Obwohl in der hier gezeigten Querschnittsdarstellung nicht erkennbar, bilden jeweils drei bis zwölf Dosieröffnungen 7 eine Öffnungsreihe, die achsparallel zur Drehachse 19 verläuft. Vier solcher Öffnungsreihen sind in Umfangsrichtung um die Drehachse 19 herum in gleichen Winkelabständen, also in 90° zueinander positioniert. Von den genannten Öffnungsreihen sind hier je eine, also insgesamt vier Dosieröffnungen 7 erkennbar. In Achsrichtung und/oder in Umfangsrichtung können aber auch abweichende Anzahlen von Dosieröffnungen 7 zweckmäßig sein.

Die Dosierwalze 5 weist einen zentralen Spannkern 10 und einen den Spannkern 10 mit radialem Abstand umschließenden Walzenmantel 9 auf. Die Dosieröffnungen 7 sind als den Walzenmantel 9 radial durchgreifende Bohrungen mit kreisförmigem Grundriss ausgebildet. Es können aber auch andere Grundrissformen zweckmäßig sein. Beispielsweise kann die Form des Grundrisses lediglich teilweise rund, oval, vieleckig, rechteckig oder quadratisch sein. Radial nach außen, also an einer Außenseite 22 des Walzenmantels 9 sind die Dosieröffnungen 7 offen. Radial nach innen, also an einer Innenseite 23 des Walzenmantels 9 sind sie mittels je eines Filterelements 8 begrenzt, welches in Größe und Form dem Querschnitt der jeweiligen Dosieröffnung 7 entspricht und deren Boden bildet.

Korrespondierend zur Anzahl der oben genannten Öffnungsreihen weist der Spannkern 10 eine Anzahl von achsparallel zur Drehachse 19 verlaufenden Aufnahmenuten auf, in denen je eine Filterleiste 11 gehalten ist. Zwischen der Filterleiste 11 und der Innenseite 23 des Walzenmantels 9 ist eine optionale Dichtung 13 angebracht.

In den Filterleisten 11 ist je ein verzweigter Druckkanal 14 ausgebildet, welcher durch die Filterelemente 8 hindurch in korrespondierende Dosieröffnungen 7 hinein mündet. Der Druckkanal 14 umfasst einen Hauptkanal 28 und mindestens eine Verzweigung 29. Im Ausführungsbeispiel umfasst der Druckkanal 14 zwölf Verzweigungen 29 korrespondierend zu einer entsprechenden Anzahl von Dosieröffnungen 7 innerhalb einer achsparallelen Reihe davon. Der Hauptkanal 28 erstreckt sich entlang einer Längsachse 25 des Druckkanals 14. Die Längsachse 25 verläuft parallel zur Drehachse 19 der Dosierwalze 5. Die Verzweigungen 29 des Druckkanals 14 erstrecken sich ausgehend vom Hauptkanal 28 radial bezüglich der Drehachse 19 bis zu den Dosieröffnungen 7.

Die Filterelemente 8 sind gemeinsam durch einen Bogen aus geeignetem Filtermaterial gebildet, welcher um den Spannkern 10 mit den Filterleisten 11 herum gewickelt ist. Es können auch aufgeklebte Filterelemente 8 zum Einsatz kommen. Die Filterleisten 11 sind über einen nicht dargestellten Spannkonus radial nach außen unter Zwischenlage des Filtermaterials gegen die Innenseite des Walzenmantels 9 verspannt. Die Dichtungen 13 pressen dabei einerseits das Filtermaterial gegen die Innenseite des Walzenmaterials, während sie andererseits rings um das jeweilige Filterelement 8 herum die zugehörige Verzweigung 29 des Druckkanals 14 sowie auch die jeweilige Dosieröffnung 7 gegen die Umgebung abdichten. Hierdurch ist sichergestellt, dass ein Druckausgleich zwischen Dosieröffnung und Druckkanal 14 allein durch das zugehörige Filterelement 8 hindurch erfolgt, und dass also die Dosieröffnungen über den zugeordneten Druckkanal 11 durch das jeweilige Filterelement 8 hindurch mit einem bestimmten gewünschten Druck beaufschlagt werden können.

Die Dosierwalze 5 ist um eine Drehachse 19 in Richtung eines Pfeils 20 drehbar gelagert und mit einem zugehörigen, hier nicht dargestellten Drehantrieb versehen. Im Betrieb wird die Dosierwalze getaktet gedreht, wobei die einzelnen Dosieröffnungen 7 in mindestens zwei Takten zyklisch in einer in Gewichtskraftrichtung oberen Füllposition I und einer in Gewichtskraftrichtung unteren Ausstoßposition III zu liegen kommen. Anstelle einer getakteten Bewegung kann auch eine kontinuierliche Drehung zweckmäßig sein. Im gezeigten Ausführungsbeispiel durchlaufen die einzelnen Dosieröffnungen 7 in vier Takten zyklisch vier verschiedene Positionen, beginnend mit der oberen Füllposition I, gefolgt von einer ersten Zwischenposition II. Danach folgen die untere Ausstoßposition III und eine zweite Zwischenposition IV, bevor der Zyklus an der oberen Füllposition I wieder beginnt. In der oberen Füllposition I wird die jeweilige Dosieröffnung 7 mit dem pulvrigen Produkt 1 unter Bildung einer Dosiermenge 2 aus dem Produktvorrat 4 heraus befüllt. In der nachfolgenden ersten Zwischenposition II kann optional eine Füllstandskontrolle vorgenommen werden. In der unteren Ausstoßposition III wird die Dosiermenge 2 aus der Dosieröffnung 7 ausgestoßen und dem Zielbehälter 21 zugeführt. Die nunmehr entleerte Dosieröffnung 7 wird zur zweiten Zwischenposition IV weiterbewegt und kann dort optional beispielsweise durch Ausblasen gereinigt werden.

Die Dosieröffnungen 7 sind innenseitig und durch das jeweilige Filterelement 8 hindurch bei Bedarf mit einem Unterdruck beaufschlagbar. Hierzu wird zumindest in der Füllposition 41 eine unterdruckübertragende Verbindung zwischen dem Druckkanal 14 und einer Unterdruckquelle 15 hergestellt. Das Niveau des von der Unterdruckquelle 15 bereitgestellten Unterdrucks wird mittels eines schematisch angedeuteten Steuergeräts 18 eingestellt, was durch eine geeignete Steuerung, gegebenenfalls aber auch durch eine Regelung erfolgen kann. Jedenfalls überträgt sich der solchermaßen eingestellte Unterdruck durch den Druckkanal 14 und das Filterelement 8 hindurch in die Dosieröffnung 7, wenn diese sich in der oberen Füllposition 41 befindet. Der Unterdruck saugt das pulvrige Produkt 1 aus dem Produktvorrat 4 in die Dosieröffnung 7. Das Filterelement 8 ist hinsichtlich seiner Durchlässigkeit derart bemessen und auf das Produkt 1 abgestimmt, dass es zwar luftdurchlässig und damit auch druckübertragend ist, dass aber das pulvrige Produkt 1 zurückgehalten und am Durchtritt gehindert wird. Folglich entsteht eine Dosiermenge 2 des pulvrigen Produkts 1, die die Dosieröffnung 7 vollständig ausfüllt, und deren Volumen dem Volumen der Dosieröffnung 7 entspricht. Der Vorgang des Ausfüllens kann noch optional durch einen nicht dargestellten Rührer im Produktvorrat 4 unterstützt werden. Abhängig vom Niveau des herrschenden Unterdrucks und von den Eigenschaften des Produkts 1 stellt sich jedenfalls ein bestimmter Verdichtungsgrad des Produkts 1 in der Dosieröffnung 7 ein, so dass aus dem vorgegebenen Volumen der Dosieröffnung 7 auch eine bestimmte Masse der Dosiermenge 2 folgt.

Der anliegende Unterdruck kann auf gleichem oder auch auf verringertem Niveau noch bis zum Erreichen der Ausstoßposition III aufrechterhalten werden, um ein vorzeitiges Herausfallen der Dosiermenge 2 aus der Dosieröffnung 7 zu verhindern. Spätestens beim Erreichen der unteren Ausstoßposition III wird jedoch die Unterdruckbeaufschlagung beendet. Stattdessen wird nun die Dosieröffnung 7 in der Ausstoßposition 43 durch das Filterelement 8 hindurch mit einem Überdruck, nämlich mit einem Ausstoß-Überdruck p beaufschlagt. Hierzu wird eine überdruckübertragende Verbindung zwischen dem Druckkanal 14 und einer Überdruckquelle 16 hergestellt. Das Niveau des von der Überdruckquelle 16 bereitgestellten Überdrucks wird ebenso wie im vorgenannten Fall der Unterdruckquelle mittels des schematisch angedeuteten Steuergeräts 18 eingestellt. Der solchermaßen eingestellte Überdruck überträgt sich durch den Druckkanal 14 und das Filterelement 8 hindurch in die Dosieröffnung 7, wenn diese sich in der unteren Ausstoßposition III befindet. Der Überdruck bläst als Ausstoß-Überdruck p die Dosiermenge 2 aus der Dosieröffnung 7 heraus. Ergänzend kann die Überdruckbeaufschlagung noch in der nachfolgenden zweiten Zwischenposition IV für den dortigen Reinigungsvorgang der entleerten Dosieröffnung 7 verwendet werden.

Teil der oben schon erwähnten kapazitiven Messvorrichtung 6 zur Massenbestimmung der einzelnen Dosiermengen 2 ist ein kapazitiver Sensor 17, welcher ebenfalls mit dem Steuergerät 18 verbunden ist. Im Steuergerät 18 werden die Messdaten des kapazitiven Sensors 17 erfasst und ausgewertet, was insgesamt zur Bildung der Messvorrichtung 6 führt. Anstelle einer kapazitiven Messvorrichtung 6 kann aber auch eine andere geeignete Messvorrichtung zur Bestimmung der Einzelmassen der Dosiermengen 2 zum Einsatz kommen. Jedenfalls fallen die aus der Dosieröffnung 7 in der unteren Ausstoßposition III ausgestoßenen, hier mit 2' gekennzeichneten Dosiermengen durch den Sensor, hier durch den kapazitiven Sensor 17 hindurch in den Zielbehälter 21. Aus der hierbei im kapazitiven Sensor 17 erfolgenden Feldänderung wird die Masse der hindurchtretenden Dosiermenge 2 entsprechend einem AMV-System (Advance Mass Verification System) bestimmt. Für die Ausführung des erfindungsgemäßen Verfahrens ist es nicht zwingend erforderlich, dass die Masse jeder einzelnen ausgeworfenen Dosiermenge 2 bestimmt wird. Vielmehr kann es ausreichen, wenn sich einzelne Massenbestimmungen erst nach einigen Dosierzyklen wiederholen. Bevorzugt wird jedoch eine Massenbestimmung bei 100% der abgemessenen Dosiermengen 2 durchgeführt.

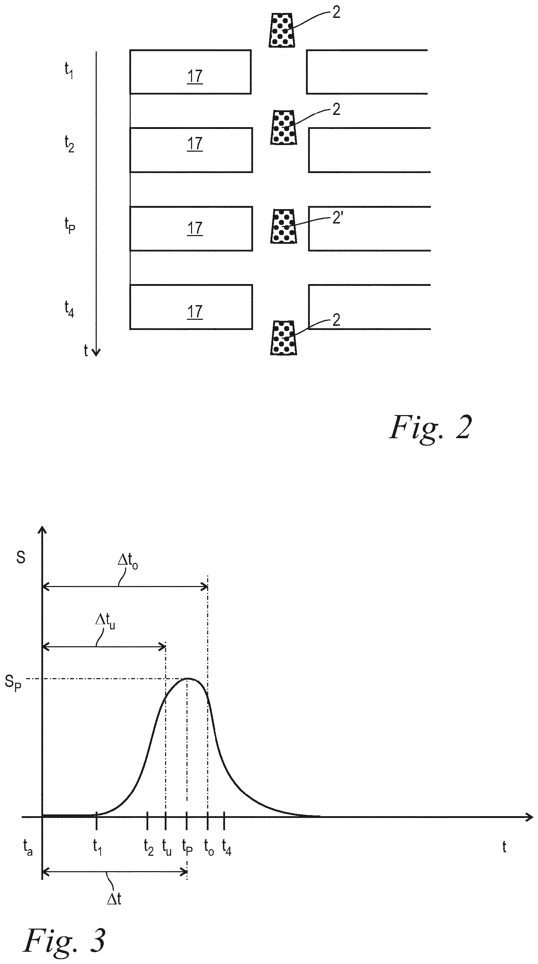

Fig. 2 zeigt in einer schematischen Phasendarstellung eine einzelne Dosiermenge 2 bei der Annäherung an und beim Durchtritt durch die Messstrecke des kapazitiven Sensors 17. Nach dem erfindungsgemäßen Verfahren wird mittels der kapazitiven Messvorrichtung 6 und ihres kapazitiven Sensors 17 als Teil davon ein zeitlicher Verlauf eines Messsignals S beim Durchtritt der Dosiermenge 2 aufgenommen, welcher in Form eines schematischen Diagramms in Fig. 3 dargestellt ist. Im Diagramm nach Fig. 3 ist ein Ausstoß-Zeitpunkt tₐ eingetragen, an welchem der Ausstoß der Dosiermenge 2 in der Ausstoßposition III nach Fig. 1 vorgenommen wird. Dies ist vorliegend der Zeitpunkt, an welchem das Steuergerät 18 das Signal zum Aufschalten des Ausstoß-Überdrucks p auf die Dosieröffnung 7 in der Ausstoßposition III gibt. Alternativ kann es aber auch zweckmäßig sein, den Zeitpunkt des tatsächlichen Überdruckaufbaus oder des tatsächlichen Ausstoßes über einen geeigneten Sensor zu ermitteln und als Ausstoß-Zeitpunkt tₐ anzusetzen.

Aus der Zusammenschau der Fig. 2 und 3 ergibt sich des Weiteren, dass sich die Dosiermenge 2 zu einem ersten Zeitpunkt t₁ unmittelbar am oberen Eingang des kapazitiven Sensors 17 befindet und hierbei noch kein Messsignal S generiert. Die Größe des Messsignals S ist zum Zeitpunkt t₁ noch näherungsweise Null. Darauf folgend befindet sich die Dosiermenge 2 zu einem zweiten Zeitpunkt t₂ im Eingangsabschnitt der Messstrecke des kapazitiven Sensors 17, wobei der Verlauf des Messsignals S ansteigend ist, und zum vierten Zeitpunkt t₄ im Ausgangsabschnitt der Messstrecke des kapazitiven Sensors 17, wobei der Verlauf des Messsignals S absteigend ist.

Etwa in der Mitte dazwischen erzeugt die hier als Dosiermenge 2' bezeichnete Menge einen Peakwert beziehungsweise einen Maximalwert Sₚ des Messsignals S, von dem ein zugehöriger Maximalwertzeitpunkt tₚ als dritter Zeitpunkt gemäß dem Diagramm nach Fig. 3 bestimmt wird. Es wird nun die zeitliche Differenz zwischen dem Ausstoß-Zeitpunkt tₐ und dem Maximalwertzeitpunkt tₚ gebildet und als Ist-Zeitspanne Δt für die Dauer bis zum Erreichen des Maximalwerts Sₚ angesetzt.

Gemäß dem erfindungsgemäßen Verfahren wird diese Ist-Zeitspanne Δt mit mindestens einer Sollzeitspanne verglichen. Eine solche Sollzeitspane kann eine einzige fest vorgegebene Ziel-Zeitspanne sein. Vorliegend wurde gemäß Fig. 3 anstelle eines diskreten Wertes ein Toleranzbereich aufgespannt. Hierzu wurde eine obere Grenzeitspanne Δtₒ vom Ausstoß-Zeitpunkt tₐ zum oberen Grenzzeitpunkt tₒ als eine erste Sollzeitspanne festgesetzt. Außerdem wurde eine untere Grenzeitspanne Δtᵤ vom Ausstoß-Zeitpunkt tₐ bis zum unteren Grenzzeitpunkt tᵤ als eine zweite Sollzeitspanne festgesetzt.

Die obere Grenzeitspanne Δtₒ und die untere Grenzeitspanne Δtᵤ grenzen einen Toleranzbereich für die Ist-Zeitspanne Δt ein. Sofern sich die Ist-Zeitspanne Δt innerhalb dieses Toleranzbereichs befindet, wenn sich also der Maximalwertzeitpunkt tₚ gemäß der Darstellung nach Fig. 3 zwischen oberen Grenzzeitpunkt tₒ und dem unteren Grenzzeitpunkt tᵤ befindet, dann bleibt der oben im Zusammenhang mit Fig. 1 beschriebene Dosierprozess unbeeinflusst.

Falls aber der schon erwähnte Zeitspannen-Vergleich ergibt, dass die Ist-Zeitspanne Δt die obere Grenzeitspanne Δtₒ überschreitet, dass also der Maximalwertzeitpunkt tₚ oberhalb des oberen Grenzzeitpunktes tₒ liegt, dann ist das ein Zeichen dafür, dass die Ausblas- und Fallgeschwindigkeit der Dosiermenge 2 zu gering ist. Als Konsequenz und zum Ausgleich wird nach dem erfindungsgemäßen Verfahren eine Erhöhung des Ausstoß-Überdrucks p vorgenommen. Die Erhöhung des Ausstoß-Überdrucks p geschieht solchermaßen, dass beziehungsweise bis die Ist-Zeitspanne Δt wieder im vorstehend beschriebenen Toleranzbereich ist.

In analoger Weise erfolgt eine Anpassung des Ausstoß-Überdrucks p auch in Gegenrichtung: Falls der Zeitspannen-Vergleich ergibt, dass die Ist-Zeitspanne Δt die untere Grenzeitspanne Δtᵤ unterschreitet, dass also der Maximalwertzeitpunkt tₚ unterhalb des unteren Grenzzeitpunktes tᵤ liegt, dann ist das ein Zeichen dafür, dass die Ausblas- und Fallgeschwindigkeit der Dosiermenge 2 zu hoch ist. Als Konsequenz und zum Ausgleich wird nach dem erfindungsgemäßen Verfahren eine Verringerung des Ausstoß-Überdrucks p vorgenommen. Die Verringerung des Ausstoß-Überdrucks p geschieht solchermaßen, dass beziehungsweise bis die Ist-Zeitspanne Δt wieder im vorstehend beschriebenen Toleranzbereich ist.

Im Ergebnis geht es also bei der Erfindung darum, die gemessene Ist-Zeitspanne Δt möglichst konstant, zumindest aber in einem vorgegebenen Toleranzbereich zu halten. Falls hierzu eine Anpassung des Ausstoß-Überdrucks p erforderlich wird, kann diese Anpassung (Erhöhung oder Verringerung) inkrementell in fest vorgegebenen Druckschritten vorgenommen werden. Alternativ sieht das erfindungsgemäße Verfahren eine Anpassung proportional zur Abweichung der Ist-Zeitspanne Δt vom Sollzeitwert vor.

Die Anpassung kann anhand von stichprobenartigen Einzel-Zeitmessungen vorgenommen werden. Im vorstehend beschriebenen Ausführungsbeispiel wird die Ist-Zeitspanne Δt durch einen Mittelwert von mehreren erfassten Differenzen zwischen einem Mess-Referenzzeitpunkt und dem Ausstoß-Referenzzeitpunkt tₐ gebildet, wobei dann dieser Mittelwert mit der mindestens einen Sollzeitspanne verglichen wird.

Das Vergleichsergebnis kann dem Bedienpersonal angezeigt werden, sodass dieses eine manuelle Anpassung des Ausstoß-Überdrucks p vornehmen kann. Vorliegend erfolgt eine selbsttätige Anpassung des Ausstoß-Überdrucks p mittels des Steuergeräts 18, in welches die Messdaten der kapazitiven Messvorrichtung 6 eingespeist werden, wodurch dann ein selbsttätiger Regelkreis gebildet ist.

## Patentansprüche

1. Verfahren zur Erzeugung einzelner Dosiermengen (2) eines pulvrigen Produkts (1) mittels eines Walzendosierers (3), wobei der Walzendosierer (3) einen Produktvorrat (4), eine Dosierwalze (5) und eine kapazitive Messvorrichtung (6) zur Massenbestimmung der Dosiermengen (2) umfasst, wobei die Dosierwalze (5) umfangsseitig mit mindestens einer Dosieröffnung (7) versehen ist, wobei die Dosieröffnung (7) innenseitig mittels eines Filterelements (8) begrenzt ist und durch das Filterelement (8) hindurch mit einem Unterdruck beaufschlagbar ist, und wobei das Verfahren folgende Schritte umfasst:
- Die Dosierwalze (5) wird soweit gedreht, dass sich zumindest eine Dosieröffnung (7) in einer Füllposition (I) befindet;
- In der Füllposition (I) erfolgt ein Füllvorgang, in welchem die Dosieröffnung (7) aus dem Produktvorrat (4) mit einer Teilmenge des pulvrigen Produkts (1) befüllt wird, wobei die Dosieröffnung (7) durch das Filterelement (8) hindurch mit Unterdruck beaufschlagt wird, und wobei sich in der Dosieröffnung (7) eine Dosiermenge (2) des pulvrigen Produkts (1) bildet;
- Die Dosierwalze (5) wird soweit gedreht, dass sich die mit der Dosiermenge (2) befüllte Dosieröffnung (7) in einer Ausstoßposition (III) befindet;
- In der Ausstoßposition (III) erfolgt ein Ausstoßvorgang, wobei die Dosieröffnung (7) durch das Filterelement (8) hindurch mit einem Ausstoß-Überdruck (p) beaufschlagt und dadurch die Dosiermenge (2) aus der Dosieröffnung (7) ausgestoßen wird, und wobei ein zugehöriger Ausstoß-Referenzzeitpunkt (tₐ) bestimmt wird;
- die Einzelmasse einer ausgestoßenen Dosiermenge (2) und ein zugehöriger Mess-Referenzzeitpunkt werden mittels der kapazitiven Messvorrichtung (6) bestimmt;
- Aus der Differenz zwischen dem Mess-Referenzzeitpunkt und dem Ausstoß-Referenzzeitpunkt (tₐ) wird eine Ist-Zeitspanne (Δt) ermittelt und mit dem mindestens einer Sollzeitspanne verglichen;
- Abhängig vom Vergleich der Ist-Zeitspanne (Δt) mit der mindestens einen Sollzeitspanne wird eine Anpassung des Ausstoß-Überdrucks (p) für einen nachfolgenden Ausstoßvorgang derart vorgenommen, dass bei zu großer Ist-Zeitspanne (Δt) das Niveau des Ausstoß-Überdrucks (p) erhöht wird.

2. Verfahren nach Anspruch 1,
**dadurch gekennzeichnet, dass** mittels der kapazitiven Messvorrichtung (6) ein zeitlicher Verlauf eines Messsignals (S) beim Durchtritt der Dosiermenge (2) aufgenommen wird, dass aus dem zeitlichen Verlauf des Messsignals (S) dessen Maximalwert (Sₚ) mit einem zugehörigen Maximalwertzeitpunkt (tₚ) bestimmt wird, und dass der Mess-Referenzzeitpunkt gleich dem Maximalwertzeitpunkt (tₚ) gesetzt wird.

3. Verfahren nach Anspruch 1 oder 2,
**dadurch gekennzeichnet, dass** eine erste Sollzeitspanne durch eine obere Grenzeitspanne (Δtₒ) gebildet ist, und dass, wenn die Ist-Zeitspanne (Δt) die obere Grenzeitspanne (Δtₒ) überschreitet, eine Erhöhung des Ausstoß-Überdrucks (p) vorgenommen wird.

4. Verfahren nach einem der Ansprüche 1 bis 3,
**dadurch gekennzeichnet, dass** abhängig vom Vergleich der Ist-Zeitspanne (Δt) mit der mindestens einen Sollzeitspanne eine Anpassung des Ausstoß-Überdrucks (p) für einen nachfolgenden Ausstoßvorgang derart vorgenommen wird, dass bei zu kleiner Ist-Zeitspanne (Δt) das Niveau des Ausstoß-Überdrucks (p) verringert wird.

5. Verfahren nach Anspruch 4,
**dadurch gekennzeichnet, dass** eine zweite Sollzeitspanne durch eine untere Grenzeitspanne (Δtᵤ) gebildet ist, und dass, wenn die Ist-Zeitspanne (Δt) die untere Grenzeitspanne (Δtᵤ) unterschreitet, eine Verringerung des Ausstoß-Überdrucks (p) vorgenommen wird.

6. Verfahren nach einem der Ansprüche 1 bis 5,
**dadurch gekennzeichnet, dass** die Anpassung des Ausstoß-Überdrucks (p) inkrementell in fest vorgegebenen Druckschritten vorgenommen wird.

7. Verfahren nach einem der Ansprüche 1 bis 5,
**dadurch gekennzeichnet, dass** die Anpassung des Ausstoß-Überdrucks (p) proportional zur Abweichung der Ist-Zeitspanne (Δt) vom Sollzeitwert vorgenommen wird.

8. Verfahren nach einem der Ansprüche 1 bis 7,
**dadurch gekennzeichnet, dass** die Ist-Zeitspanne (Δt) durch einen Mittelwert von mehreren erfassten Differenzen zwischen einem Mess-Referenzzeitpunkt und einem Ausstoß-Referenzzeitpunkt (tₐ) gebildet wird, und dass dieser Mittelwert mit der mindestens einen Sollzeitspanne verglichen wird.
